# EUROPÄISCHE PATENTSCHRIFT

(11) **EP 3 451 871 B1**
(45) Veröffentlichungstag und Bekanntmachung des Hinweises auf die Patenterteilung: **15.09.2021**
(21) Anmeldenummer: 18702953.3
(22) Anmeldetag: 26.01.2018
(51) Int. Cl.: A47B 3/00, B60N 3/00, A47C 17/82

(54) **MÖBEL**
ITEM OF FURNITURE
MEUBLE

(30) Priorität: 27.01.2017 DE 102017101617; 17.05.2017 DE 102017110675
(43) Veröffentlichungstag der Anmeldung: 13.03.2019
(73) Patentinhaber: Erwin Hymer Group SE, 88339 Bad Waldsee (DE)
(72) Erfinder: DORN, Günter, 88281 Schlier (DE)
(74) Vertreter: Waller, Stefan
(86) Internationale Anmeldenummer: PCT/EP2018/051955
(87) Internationale Veröffentlichungsnummer: WO 2018/138259

(56) Entgegenhaltungen:
- CN-U- 202 514 914
- CN-U- 202 728 244
- DE-A1- 2 554 348

## Beschreibung

Die Erfindung betrifft ein Möbel nach dem Oberbegriff des Anspruchs 1 sowie ein Wohnmobil nach dem Oberbegriff des Anspruchs 11.

Tische und Möbel sind aus dem Stand der Technik hinlänglich bekannt. Unter anderem kennt man beispielsweise aus der CH 007 06 185 B1 einen Tisch, der mit Magneten ausgestattet ist, mittels derer eine Tischplatte scheinbar schwebend über Tischbeinen angeordnet werden kann.

Als problematisch kann es sich unter Umständen erweisen, dass Tische mangels ausreichender Befestigung durch äußere Einflüsse unbeabsichtigt bewegt werden können. Diese Problematik gilt gleichermaßen für Möbel.

Im Sinne der Erfindung können unter dem Begriff Möbel beispielsweise Schränke, Kommoden, Betten, Stühle, Sitzbänke etc. aufgefasst werden.

Mitunter ist es gar möglich, dass Tische bzw. Möbel durch äußere Einflüsse zu Fall gebracht werden können. Daraus kann eine erhebliche Verletzungsgefahr für unmittelbar umstehende Personen resultieren. Eine unbeabsichtigte Bewegung von Tischen kann weiterhin zur Folge haben, dass auf Tischen bzw. in Möbeln angeordnete Güter beschädigt werden können.

Insbesondere im Bereich von Freizeitfahrzeugen ist ein erhöhtes Risiko für unbeabsichtigtes Bewegen von Tischen bzw. Möbeln vorliegend, insbesondere während der Fahrt.

Es kann überdies von Vorteil sein, wenn Tisch- bzw. Möbelanordnungen in Fahrzeugen flexibel veränderbar sind. Z.B. sind Fahrzeuge bekannt, welche Anordnungen von Möbeln und Tischen auf Schienen im Boden erlauben. Dabei ist jedoch ein teilweise unflexibles Raster vorgegeben.

Aus der CN 202514914 U ist ein in einem Fahrzeug montierter Tisch bekannt mit einem Säulenfuß, in dessen Basis sich ein Magnet befindet.

Es ist Aufgabe der Erfindung, ein Möbel bereitzustellen, bei dem mit einfachen Mitteln ein unbeabsichtigtes Bewegen des Möbels unterbunden werden kann.

Zur Lösung der Aufgabe wird ein Möbel mit den Merkmalen des Patentanspruchs 1 vorgeschlagen.

Ein überdies besonders effizientes Befestigungsmittel kann vorsehen, dass das Befestigungsmittel wenigstens einen Elektromagneten, wenigstens einen Permanentmagneten und wenigstens ein magnetisierbares Material, insbesondere ein diamagnetisches oder ferromagnetisches Material umfasst.

Vorgesehen sein kann hierbei auch, dass Relativbewegungen zwischen Permanentmagnet und/oder Elektromagnet und/oder magnetisierbarem Material durchführbar sind.

Mittels eines Elektromagnets kann Halten und/oder Lösen des Möbels, beispielsweise eines Tisches bzw. des Stützmittels des Tisches von einem Benutzer individuell ermöglicht werden.

Durch die geeignete Kombination der oben genannten magnetischen oder magnetisch wirkenden Haltemittel kann für den jeweiligen Anwendungsfall die benötigte Haltekraft erreicht oder flexibel eingestellt werden. Dabei kann auch der zur Verfügung stehende Bauraum oder die nutzbare Kontaktfläche zur Befestigung auf die Wahl und den Aufbau des Haltemittels Einfluss nehmen.

Vorgesehen kann ergänzend oder alternativ auch sein, dass das Möbel an einem Deckenabschnitt befestigbar ist. Dementsprechend kann ein Wandelement auch als Deckenabschnitt angesehen werden. Ein Deckenabschnitt kann beispielsweise bei einem Fahrzeug als Dachabschnitt aufgefasst werden.

Es ist somit möglich, dass aufgrund magnetisch wirkender Kräfte ein sicheres Halten des Möbels bei Bedarf gewährleistet werden kann.

In einer Weiterbildung der Erfindung kann vorgesehen sein, dass das Befestigungsmittel in dem Korpus angeordnet und vorzugsweise mit einem Bodenelement verbindbar ist. Auf diese Weise wird die äußere Erscheinung des Möbels durch das Befestigungsmittel nicht beeinträchtigt.

In einer Weiterbildung des Möbels ist vorgesehen, dass das Befestigungsmittel mittels einer Stromquelle sowie wenigstens eines Betätigungsmittels ein- bzw. ausschaltbar ist und in dem Korpus angeordnet, vorzugsweise mit einem Bodenelement verbindbar ist. Somit wird eine Betätigung mit sehr geringem Kraftaufwand sowie eine einfache Handhabung des Befestigungsmittels ermöglicht wird. Zudem kann durch die Anordnung des Befestigungsmittels in dem Korpus ggf. Verkabelungsaufwand reduziert werden. Eine bodennahe Anordnung ermöglicht zudem ein sicheres Halten bzw. Befestigen des Möbels durch das Befestigungsmittel.

Weiterhin kann durch eine derartige Anordnung in Bodennähe Stauraum im Korpus anderweitig genutzt werden.

In einer überdies vorteilhaften Ausgestaltung kann die Erfindung vorsehen, dass vorzugsweise eine Relativbewegung zwischen Permanentmagnet und magnetisierbarem Material durchführbar ist.

Auf diese Weise kann das Befestigungsmittel beweglich ausgebildet werden, wodurch ein besonders einfaches Halten bzw. Lösen des Möbels ermöglicht werden kann. Zudem ist vorteilhaft, dass das Befestigungsmittel kompakt ausgebildet sein kann und insbesondere auch stromlos bzw. unter Verwendung geringer Spannungen betreibbar ist. Über das zu treffend gewählte magnetisierbare Material lassen sich die magnetischen Kräfte des Permanentmagneten in seiner Feldwirkung verstärken oder abschwächen.

In Kombination mit einer elektromechanisch bewirkten Relativbewegung ist hierdurch überdies möglich, mittels kurzer elektrischer Impulse ein Halten des Möbels zu deaktivieren bzw. mittels eines neuen Impulses das Halten wieder zu aktivieren.

Eine weitere Ausgestaltung eines besonders effizienten Befestigungsmittels kann vorsehen, dass das Befestigungsmittel wenigstens einen Elektromagneten und wenigstens einen Permanentmagneten umfasst, wobei eine Relativbewegung zwischen Permanentmagnet und Elektromagnet durchführbar ist.

In einer Weiterbildung kann die Erfindung vorsehen, dass das Möbel als Tisch, umfassend wenigstens ein Stützmittel, insbesondere Tischbein oder dergleichen, und wenigstens eine Tischplatte ausgebildet ist, wobei das wenigstens eine Stützmittel ein oberes Ende und ein unteres Ende aufweist und wobei das Stützmittel am oberen Ende mit der Tischplatte verbunden ist, wobei das Stützmittel das Befestigungsmittel umfasst, welches an einem unteren Ende des Stützmittels angeordnet ist und magnetische Eigenschaften aufweist.

Es ist somit möglich, dass aufgrund magnetisch wirkender Kräfte ein Halten des Tisches respektive des Stützmittels des Tisches bei Bedarf gewährleistet werden kann. Magnetmittel stellen hierbei einfache konstruktive Ausgestaltungen dar.

In einer weiteren vorteilhaften Ausgestaltung der Erfindung kann vorgesehen sein, dass das wenigstens eine Stützmittel zumindest abschnittsweise einen Hohlraum aufweist und das wenigstens eine Befestigungsmittel in dem Hohlraum angeordnet ist.

Eine derartige Anordnung des Befestigungsmittels kann eine Abschirmung des Befestigungsmittels und unbeabsichtigtes Einwirken auf andere Objekte ermöglichen. Zudem kann eine Anordnung des Befestigungsmittels in einem Hohlraum einen Schutz des Befestigungsmittels, z.B. vor Beschädigungen ermöglichen. Schließlich kann eine Anordnung in einem Hohlraum ein besonders stabiles Halten des Stützmittels bzw. des Tisches ermöglichen.

Die Erfindung kann vorsehen, dass das Befestigungsmittel mittels einer Stromquelle sowie wenigstens eines Betätigungsmittels ein- bzw. ausschaltbar ist.

Dies stellt eine einfache Möglichkeit dar, den Tisch bzw. das Stützmittel bei Bedarf befestigen bzw. von einer Befestigung lösen zu können. Hierzu ist auch sehr wenig Kraftaufwand erforderlich, so dass eine einfache Handhabung ermöglicht wird.

In einer Weiterbildung der Erfindung kann vorgesehen sein, dass die Stromquelle in dem Stützmittel angeordnet ist. Insbesondere ist vorgesehen, dass die Stromquelle in dem Tischfuß angeordnet ist.

Dies stellt eine Möglichkeit dar, eine Stromquelle ggf. nahe eines Befestigungsmittels anordnen zu können und somit Verkabelungsaufwand zu reduzieren. Eine derart angeordnete Stromquelle kann auch vor äußeren Einflüssen, z.B. vor äußeren mechanischen Einwirkungen, geschützt werden.

In einer Weiterbildung kann vorgesehen sein, dass das Betätigungsmittel an der Tischplatte angeordnet ist und insbesondere mit der Tischplatte verbunden ist.
Somit kann der Tisch bzw. das Stützmittel bei Bedarf befestigt bzw. von einer Befestigung gelöst werden, wobei eine derartige Anordnung des Betätigungsmittels eine leichte Zugänglichkeit ermöglicht. Es kann auch gewährleistet werden, dass das Betätigungsmittel nicht unbeabsichtigt betätigt wird, wodurch der Tisch bzw. das Stützmittel des Tisches nicht unbeabsichtigt gehalten bzw. gelöst werden kann.

In einer vorteilhaften Weiterbildung der Erfindung kann vorgesehen sein, dass das untere Ende des Stützmittels eine Kontaktfläche umfasst, wobei die Kontaktfläche durch einen Magneten, insbesondere einen Elektromagneten gebildet ist oder durch den Magneten, insbesondere Elektromagneten magnetisierbar ist.

Es ist somit möglich, dass aufgrund magnetisch wirkender Kräfte ein Halten des Tisches respektive des Stützmittels des Tisches bei Bedarf gewährleistet werden kann. Magnetmittel stellen hierbei einfache konstruktive Ausgestaltungen dar. Mittels eines Elektromagnets kann Halten und/oder Lösen des Tisches bzw. des Stützmittels des Tisches von einem Benutzer individuell ermöglicht werden. Eine Kontaktfläche kann eine besonders stabile Befestigung des Tisches bzw. des Stützmittels des Tisches ermöglichen.

Es kann vorgesehen sein, dass das Stützmittel Abschnitte umfasst, die derart bewegbar sind, dass der Tisch höhenverstellbar ist.

Der Tisch kann somit individuellen Bedürfnissen angepasst werden.

Es kann auch vorgesehen sein, dass ein vorzugsweise als Rahmen ausgebildetes Verbindungsmittel zwischen Tischplatte und Stützmittel angeordnet ist.

Somit kann eine stabile Verbindung zwischen Tischplatte und Stützmittel bereitgestellt werden.

Möglich ist auch, dass die Tischplatte wenigstens ein stromführendes Anschlussmittel umfasst.

Dieses kann beispielsweise mit einem elektrischen Gerät verbunden werden, wodurch der Tisch umfangreichere Verwendungsmöglichkeit aufweist.

Im Sinne der Erfindung kann die Tischplatte auch als Sitzfläche aufgefasst werden. Somit kann der Tisch im Sinne der Erfindung auch z.B. als Stuhl oder dergleichen zum Sitzen herangezogen werden. Dis kann durch ein Absenken der Tischplatte auf Sitzhöhe überdies verdeutlicht werden.

Ein Befestigungsmittel, das in einem Korpus angeordnet ist, kann durch eine solche Anordnung vor Beschädigungen geschützt werden und gleichzeitig ein sicheres Halten des Möbels ermöglichen.

Im Sinne der Erfindung kann eine Sitzfläche und/oder Liegefläche auch als Korpus aufgefasst werden. Auch ein Stuhlbein kann im Sinne der Erfindung als Korpus aufgefasst werden.

Die Erfindung betrifft weiterhin ein Wohnmobil, Wohnwagen oder dergleichen Reise- bzw. Freizeitfahrzeug, umfassend einen Wohnbereich und/oder einen Sanitärbereich mit einem Boden sowie zumindest ein im Wohnbereich und/oder im Sanitärbereich angeordnetes Möbel.

Weiterhin kann die Erfindung auch bei Mehrpersonen-Fahrzeugen oder dergleichen, z.B. bei Kleinbusen oder geräumigen Limousinen zur Bereitstellung einer flexiblen Innenraumgestaltung Einsatz finden. Dies kann z.B. für ein Fahrzeug genutzt werden, bei welchem während der Fahrt eine flexible Besprechungssituation bereitgestellt werden soll.

Erfindungswesentlich ist, dass das Möbel wenigstens ein Befestigungsmittel umfasst, welches magnetische Eigenschaften aufweist und der Boden wenigstens in einem Teilbereich zumindest eine metallische Fläche umfasst, wobei das Möbel magnetisch an dem Boden lösbar befestigbar ist.

Es ist somit möglich, dass aufgrund magnetisch wirkender Kräfte ein Halten des Tisches bzw. Möbels bei Bedarf gewährleistet werden kann. Magnetmittel stellen hierbei einfache konstruktive Ausgestaltungen dar. Verletzungsgefahr durch unbeabsichtigtes Bewegen des Tisches bzw. Möbels kann z.B. während der Fahrt reduziert werden.

Die Erfindung kann auch vorsehen, dass bei einem Wohnmobil, Wohnwagen oder dergleichen Reise- bzw. Freizeitfahrzeug die metallische Fläche als magnetisch wirksame Schiene oder als Plattenelement ausgebildet ist, welche/s in den Boden eingelassen, vorzugsweise unsichtbar integriert oder von einem Bodenbelag überdeckt ist. Somit können Beschädigungen der magnetischen Fläche vermieden werden.

Die Erfindung kann auch vorsehen, dass das Möbel als Tisch ausgebildet ist.

Die Erfindung wird im Folgenden anhand von Zeichnungen näher beschrieben. Hierbei zeigt:
- Fig. 1:: eine schematische Darstellung eines erfindungsgemäßen Tisches;
- Fig. 2:: eine schematische Darstellung des in Fig. 1 gezeigten Tisches in einer Unteransicht;
- Fig. 3:: eine schematische Darstellung eines weiteren Ausführungsbeispiels eines erfindungsgemäßen Tisches;
- Fig. 4:: eine schematische Darstellung des Tisches aus Fig. 1 in einer Seitenansicht;
- Fig. 5:: eine schematische Darstellung eines weiteren Ausführungsbeispiels eines erfindungsgemäßen Tisches in einer Seitenansicht;
- Fig. 6:: eine schematische Darstellung eines Wohnmobils, in dem ein erfindungsgemäßer Tisch angeordnet ist;
- Fig. 7:: eine schematische Darstellung eines erfindungsgemäßen Möbels;
- Fig. 8:: eine schematische Draufsicht von erfindungsgemäßen Möbeln und deren Anordnung in einem Wohnmobil;
- Fig. 9:: eine weitere schematische Draufsicht von erfindungsgemäßen Möbeln und deren Anordnung in einem Wohnmobil.

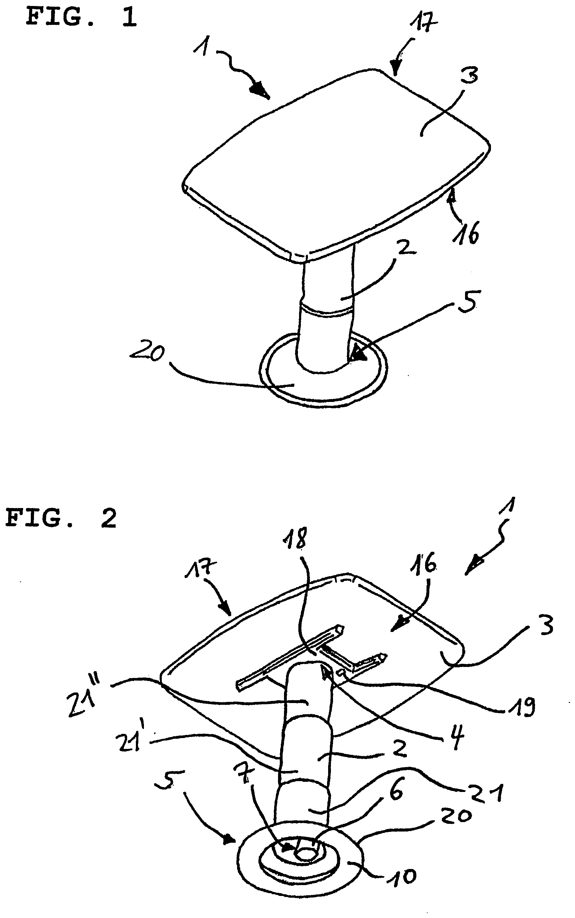

In der Fig. 1 ist eine schematische Darstellung eines Tisches 1 gezeigt. Der Tisch 1 umfasst ein Stützmittel 2 und eine Tischplatte 3.

Die Tischplatte 3 umfasst eine Unterseite 16 und eine Oberseite 17.

Das Stützmittel 2 ist als Tischbein ausgestaltet und weist ein oberes Ende 4 und ein unteres Ende 5 auf. Das Stützmittel 2 ist am oberen Ende 4 mit der Tischplatte 3 verbunden. In nicht näher gezeigter Art und Weise umfasst das Stützmittel 2 wenigstens ein Befestigungsmittel, welches an dem unteren Ende 5 des Stützmittels 2 angeordnet ist und magnetische Eigenschaften aufweist.

Die Erfindung kann insbesondere auch vorsehen, dass das Stützmittel 2 über beispielsweise einen Rahmen oder dergleichen Verbindungsmittel mit der Tischplatte 3 verbindbar ist (siehe Fig. 2).
Im gezeigten Ausführungsbeispiel umfasst das Stützmittel 2 einen Sockel 20, der eine vergrößerte Auflagefläche des Tisches 1 und damit einhergehend eine erhöhte Standstabilität des Tisches 1 ermöglichen kann. Im Ausführungsbeispiel ist der Sockel 20 unmittelbar am unteren Ende 5 des Stützmittels 2 angeordnet.

Der in Fig. 1 gezeigte Tisch 1 kann auch als so genannter Bistro-Tisch aufgefasst werden, der lediglich ein Stützmittel 2 umfasst.

Die Erfindung betrifft jedoch ausdrücklich auch Tische, die mehr als ein Stützmittel, insbesondere vier Stützmittel, umfassen.

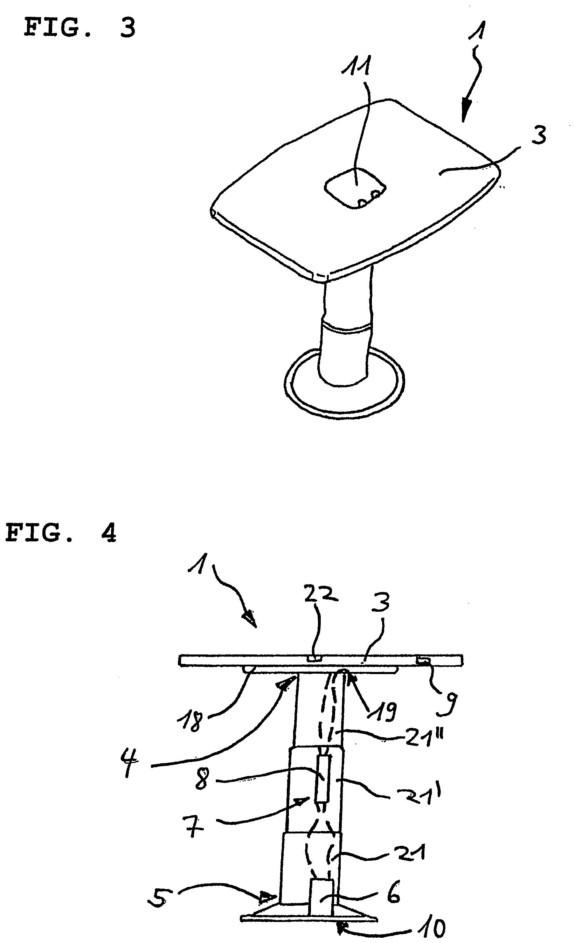

Fig. 2 zeigt eine schematische Darstellung eines Ausführungsbeispiels eines erfindungsgemäßen Tisches 1 in einer Unteransicht. Im gezeigten Ausführungsbeispiel ist die Tischplatte 3 über einen Rahmen 18 mit dem Stützmittel 2 verbunden.
Weiterhin ist dargestellt, dass der Rahmen 18 eine Ladeeinrichtung 19 umfasst, mit der eine beispielsweise als Akku ausgebildete Stromquelle (hier nicht dargestellt, siehe z.B. Fig. 4) aufladbar ist.

Es kann auch vorgesehen sein, dass die Ladeeinrichtung 19 zum Laden von anderweitig hier nicht näher gezeigten elektronischen Geräten, z.B. tragbaren Telefonen oder dergleichen Kommunikationsmittel vorgesehen sein und entsprechend ausgebildet sein kann.
Das Stützmittel 2 umfasst einen Hohlraum 7, in dem ein Befestigungsmittel 6 angeordnet ist.

Somit umfasst das Stützmittel 2 wenigstens ein Befestigungsmittel 6, welches an einem unteren Ende 5 des Stützmittels 2 angeordnet ist. Das Befestigungsmittel 6 weist magnetische Eigenschaften auf.

Der Tisch 1 ist folglich mittels des Stützmittels 2, welches ein Befestigungsmittel 6 umfasst, mit bzw. an einem nicht näher dargestellten Boden bzw. einer Grundfläche durch magnetische Kräfte befestigbar.

Es kann daher auch ein verstärkter Halt des Tisches 1 auf einer entsprechend magnetisierten Grundfläche bzw. einem entsprechend magnetisierten Boden (hier nicht dargestellt) ermöglicht werden.

Es ist auch dargestellt, dass das untere Ende 5 des Stützmittels 2 eine Kontaktfläche 10 umfasst. Es kann vorgesehen sein, dass die Kontaktfläche 10 durch einen Magneten, insbesondere einen Elektromagneten, gebildet ist oder durch den Magneten, insbesondere Elektromagneten, magnetisierbar ist.

Ein derartiger Magnet bzw. Elektromagnet kann z.B. auch als Ringmagnet aufgefasst werden.

Es kann auch vorgesehen sein, dass die Kontaktfläche 10 durch das Befestigungsmittel 6 magnetisierbar ist. Somit kann auch die Kontaktfläche 10 als Befestigungsmittel aufgefasst werden.

Fig. 3 zeigt eine weitere Ausführungsform eines erfindungsgemäßen Tisches 1. Die Tischplatte 3 umfasst ein Abdeckmittel für wenigstens ein hier nicht näher gezeigtes Anschlussmittel (siehe Fig. 4).

Fig. 4 zeigt eine schematische Darstellung des Tisches 1 (siehe auch Fig. 1) in einer Seitenansicht. Es ist dargestellt, dass das Stützmittel 2 zumindest abschnittsweise einen Hohlraum 7 aufweist und das Befestigungsmittel 6 in dem Hohlraum 7 angeordnet ist.

Weiterhin ist ein Betätigungsmittel 9 dargestellt. Es ist gezeigt, dass das Betätigungsmittel 9 an der Tischplatte 3 angeordnet ist und insbesondere mit der Tischplatte 3 verbunden ist. Es kann vorgesehen sein, dass das Befestigungsmittel 6 mittels einer Stromquelle 8 sowie wenigstens eines Betätigungsmittels 9 ein- bzw. ausschaltbar ist. Hierzu kann vorgesehen sein, dass das Befestigungsmittel 6 als Elektromagnet ausgebildet ist.

Das Betätigungsmittel 9 kann auch anderweitig am Tisch angeordnet sein.

Im Ausführungsbeispiel ist gezeigt, dass die Stromquelle 8 in dem Stützmittel 2 angeordnet ist. Es ist bevorzugt, dass die Stromquelle 8 als Akku ausgebildet ist.

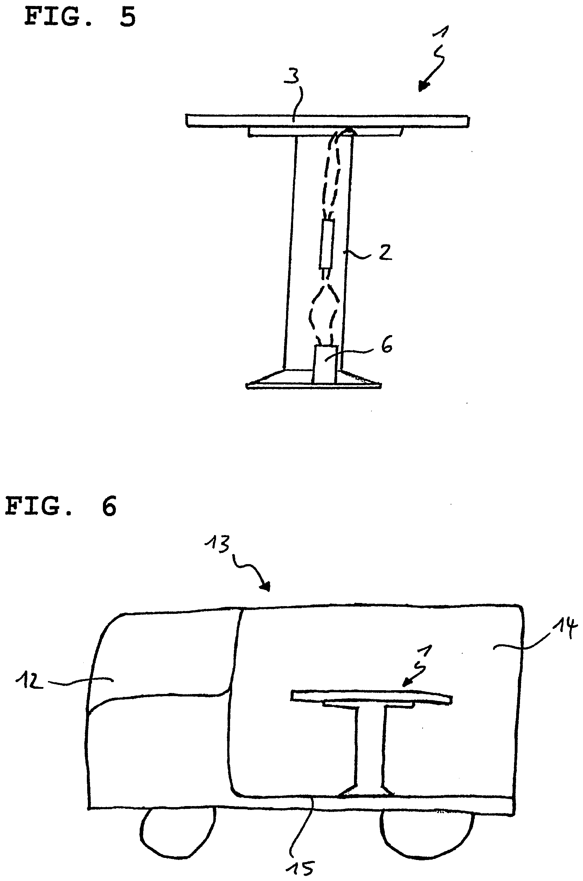

Es ist weiterhin gezeigt, dass das Stützmittel 2 Abschnitte 21, 21', 21" umfasst, die derart bewegbar sind, dass der Tisch 1 höhenverstellbar ist.
Es kann auch vorgesehen sein, dass das Stützmittel 2 als starres Stützmittel 2 ausgebildet ist (siehe Fig. 5). Dementsprechend kann vorgesehen sein, dass das Stützmittel 2 bzw. der Tisch 1 nicht höhenverstellbar ausgebildet ist.
Fig. 6 zeigt ein Wohnmobil, Wohnwagen oder dergleichen Reise- bzw. Freizeitfahrzeug 13, umfassend einen Wohnbereich 14 und einen Fahrerbereich 11.

Es ist weiterhin gezeigt, dass das Wohnmobil 13 einen Boden 15 umfasst. Weiterhin ist der Tisch 1 gezeigt (siehe z.B. Fig. 2), der auf dem Boden 15 angeordnet ist. Hierbei ist insbesondere vorgesehen, dass der Boden 15 wenigstens in einem Teilbereich zumindest eine metallische Fläche umfasst, mittels dem der Tisch 1 mit dem Boden 15 lösbar befestigbar ist. Somit kann eine Befestigung des Tisches 1 mit dem Boden 15 erfolgen, indem ein Befestigungsmittel (siehe z.B. Fig. 4), welches magnetische Eigenschaften aufweist, mit einer metallischen Fläche in dem Boden 15, zusammenwirkt. Die metallische Fläche kann einer magnetisch wirksamen Fläche gleich bedeutend angesehen werden.

Folglich kann vorgesehen sein, dass der Boden 15 eine magnetisch wirksame Fläche umfassen kann. Weiterhin kann vorgesehen sein, dass der Fahrerbereich 12 und/oder der Wohnbereich 12 eine magnetisch wirksame Fläche umfassen kann, auf bzw. mit der der Tisch 1 bzw. ein Möbel 24 befestigbar ist.

Es wird folglich eine lösbare Befestigung des Tisches 1 bzw. des Möbels in dem Wohnmobil 13 dadurch ermöglicht, dass der Boden 15 eine magnetisch wirksame Fläche umfasst, die mit dem Befestigungsmittel in dem Stützmittel (siehe Fig. 4) zusammenwirkt, wobei im Falle des Tisches das Stützmittel gleichermaßen magnetische Eigenschaften aufweist.
Hierbei ist selbstverständlich auf entsprechend geeignete magnetische Polarität des Befestigungsmittels bzw. des Bodens 15 zu achten.

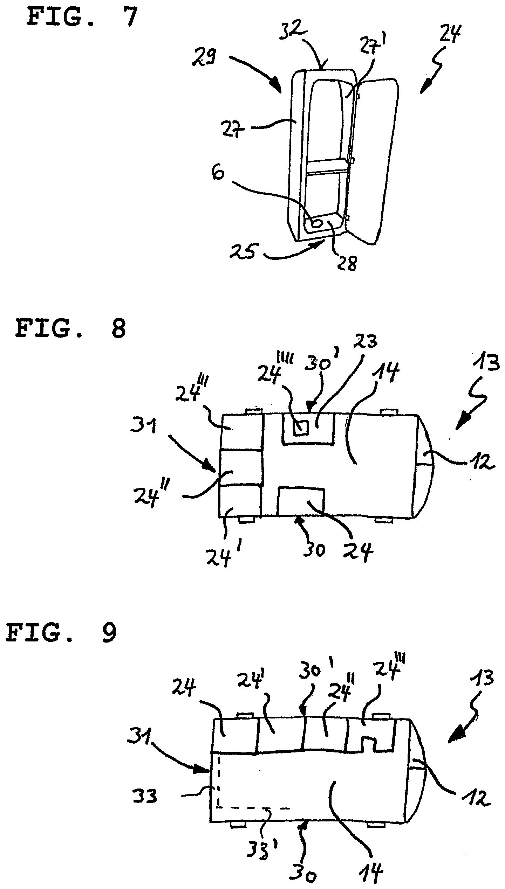

In der Fig. 7 ist ein erfindungsgemäßes Möbel 24 in einer schematischen Darstellung gezeigt. Das Möbel 24 umfasst einen Korpus 29 bildende Seitenelemente 27, 27', ein Deckenelement 32 und ein Bodenelement 28. Ferner umfasst das Möbel 24 ein Befestigungsmittel 6, welches magnetische Eigenschaften aufweist. Im Ausführungsbeispiel ist das Möbel 24 als Schrank ausgebildet.

Das Befestigungsmittel 6 ist im Ausführungsbeispiel am unteren Ende 25 und innerhalb des Korpus 29 angeordnet. Das Befestigungsmittel 6 ist somit von außen nicht sichtbar, vor Beschädigungen geschützt in Bodennähe angeordnet, so dass das Möbel mit ausreichender Befestigungskraft am Boden (siehe z.B. Fig. 8) befestigbar ist.

In den Fig. 8 und 9 sind schematische Draufsichten von Möbeln und deren Anordnungen in einem Wohnmobil, Wohnwagen, etc. 13 dargestellt. Hierbei es möglich, dass Möbel 24, 24', 24", 24''', 24'''' im Heckbereich 31 (siehe Fig. 8) bzw. an Seitenbereichen 30, 31' des Wohnmobils, Wohnwagens 3, etc. angeordnet sind (siehe Fig. 9).

Derart unterschiedliche Anordnungen von Möbeln 24, 24', 24", 24''' bzw. 24'''' im Wohnmobil, Wohnwagen 13, etc. ermöglichen einerseits individuelle Benutzungen des Wohnmobils. Andererseits können durch spezielle Anordnung von Möbeln 24, 24', 24", 24''', 24'''' Gewichtsverteilungen im Wohnmobil, Wohnwagen 13, etc. realisiert werden, die das Fahrverhalten des Wohnmobils, Wohnwagens 13, etc. positiv beeinflussen können.

Es kann im Rahmen der Erfindung vorgesehen sein, dass die metallische Fläche als magnetisch wirksame Schiene 33, 33' ausgebildet ist, wie dies in der Fig. 9 durch eine gestrichelte Linie schematisch dargestellt ist.

### Bezugszeichenliste:

- 1: Tisch
- 2: Stützmittel
- 3: Tischplatte
- 4: Oberes Ende (des Stützmittels)
- 5: Unteres Ende (des Stützmittels)
- 6: Befestigungsmittel
- 7: Hohlraum
- 8: Stromquelle
- 9: Betätigungsmittel
- 10: Kontaktfläche
- 11: Abdeckmittel
- 12: Fahrerbereich
- 13: Wohnmobil, Wohnwagen oder dergleichen Reise- bzw. Freizeitfahrzeug
- 14: Wohnbereich
- 15: Boden
- 16: Unterseite (der Tischplatte)
- 17: Oberseite (der Tischplatte)
- 18: Rahmen
- 19: Ladeeinrichtung
- 20: Sockel
- 21: Abschnitt des Stützmittels
- 21': Abschnitt des Stützmittels
- 21": Abschnitt des Stützmittels
- 22: Anschlussmittel
- 23: Sanitärbereich
- 24, 24': Möbel
- 24', 24": Möbel
- 24''': Möbel
- 24'''': Möbel
- 25: Unteres Ende (des Möbels)
- 26: Magnetmittel
- 27: Seitenwand
- 27': Seitenwand
- 28: Bodenelement
- 29: Korpus
- 30: Seitenbereich (des Wohnmobils, etc.)
- 30': Seitenbereich (des Wohnmobils, etc.)
- 31: Heckbereich (des Wohnmobils, etc.)
- 32: Deckenelement
- 33: Schiene
- 33': Schiene

## Patentansprüche

1. Möbel (24), umfassend einen Korpus (29) bildende Seitenelemente (27, 27'), ein Deckenelement (32) und/oder Bodenelement (28) und/oder eine Sitzfläche wobei das Möbel (24) wenigstens ein Befestigungsmittel (6) zur Befestigung des Möbels (24) an einem Bodenelement (28) oder einem Wandelement umfasst und das Befestigungsmittel (6) magnetische Eigenschaften aufweist,
**dadurch gekennzeichnet,**
**dass** das wenigstens eine Befestigungsmittel (6) wenigstens eine Anordnung aus mindestens einem Permanentmagneten und mindestens einem magnetisierbaren Material sowie mindestens einem Elektromagneten umfasst, wobei vorzugsweise eine Relativbewegung des Permanentmagnet durch den Elektromagneten durchführbar ist.

2. Möbel (24) nach Anspruch 1,
**dadurch gekennzeichnet,**
**dass** das Befestigungsmittel (6) in dem Korpus (29) angeordnet und vorzugsweise mit einem Bodenelement (28) verbindbar ist.

3. Möbel (24) nach Anspruch 1 oder 2,
**dadurch gekennzeichnet,**
**dass** das Befestigungsmittel (6) mittels einer Stromquelle (8) sowie wenigstens eines Betätigungsmittels (9) ein- bzw. ausschaltbar ist und in dem Korpus angeordnet ist und vorzugsweise mit einem Bodenelement verbindbar ist.

4. Möbel (24) nach einem der vorangegangenen Ansprüche,
**dadurch gekennzeichnet,**
**dass** eine Relativbewegung zwischen Permanentmagnet und magnetisierbarem Material durchführbar ist.

5. Möbel (24) nach einem der vorangegangenen Ansprüche,
**dadurch gekennzeichnet,**
**dass** das Möbel (24) als Tisch (1), umfassend wenigstens ein Stützmittel (2), insbesondere Tischbein oder dergleichen, und wenigstens eine Tischplatte (3) ausgebildet ist, wobei das wenigstens eine Stützmittel (2) ein oberes Ende (4) und ein unteres Ende (5) aufweist und wobei das Stützmittel (2) am oberen Ende (4) mit der Tischplatte (3) verbunden ist, wobei das Stützmittel (2) das Befestigungsmittel (6) umfasst, welches an einem unteren Ende (5) des Stützmittels (2) angeordnet ist und magnetische Eigenschaften aufweist.

6. Tisch nach Anspruch 5,
**dadurch gekennzeichnet,**
**dass** das wenigstens eine Stützmittel (2) zumindest abschnittsweise einen Hohlraum (7) aufweist und das wenigstens eine Befestigungsmittel (6) in dem Hohlraum (7) angeordnet ist.

7. Tisch nach einem der Ansprüche 5 oder 6,
**dadurch gekennzeichnet,**
**dass** das Betätigungsmittel (9) an der Tischplatte (3) angeordnet ist und insbesondere mit der Tischplatte (3) verbunden ist.

8. Tisch nach einem der vorangehenden Ansprüche 5 bis 7,
**dadurch gekennzeichnet,**
**dass** das untere Ende (5) des Stützmittels (2) eine Kontaktfläche (10) umfasst, wobei die Kontaktfläche (10) durch einen Magneten (11), insbesondere einen Elektromagneten gebildet ist oder durch den Magneten (11), insbesondere Elektromagneten magnetisierbar ist.

9. Tisch nach einem der vorangehenden Ansprüche 5 bis 8,
**dadurch gekennzeichnet,**
**dass** das Stützmittel Abschnitte (21, 21', 21") umfasst, die derart bewegbar sind, dass der Tisch (1) höhenverstellbar ist.

10. Tisch nach einem der vorangehenden Ansprüche 5 bis 9,
**dadurch gekennzeichnet,**
**dass** die Tischplatte (3) wenigstens ein stromführendes Anschlussmittel (22) umfasst.

11. Wohnmobil, Wohnwagen oder dergleichen Reise- bzw. Freizeitfahrzeug (13), umfassend einen Wohnbereich (14) und/oder einen Sanitärbereich (23) mit einem Boden (15) sowie zumindest ein im Wohnbereich (14) und/oder in dem Sanitärbereich (23) angeordnetes Möbel (24),
**dadurch gekennzeichnet,**
**dass** das Möbel (24) nach wenigstens einem der Ansprüche 1 bis 10 ausgebildet ist und der Boden (15) wenigstens in einem Teilbereich zumindest eine metallische Fläche umfasst, wobei das Möbel (24) magnetisch an dem Boden (15) lösbar befestigbar ist.

12. Wohnmobil, Wohnwagen oder dergleichen Reise- bzw. Freizeitfahrzeug nach Anspruch 11,
**dadurch gekennzeichnet,**
**dass** die metallische Fläche als magnetisch wirksame Schiene (33, 33') oder als Plattenelement ausgebildet ist, welche/s in den Boden (15) eingelassen, vorzugsweise unsichtbar integriert oder von einem Bodenbelag überdeckt ist.

## Claims

1. Item of furniture (24), comprising lateral elements (27, 27') which form a structure (29), a top element (32) and/or bottom element (28) and/or a seat surface, wherein the item of furniture (24) comprises at least one securing means (6) for securing the item of furniture (24) to a bottom element (28) or a wall element and the securing means (6) has magnetic properties,
**characterized**
**in that** the at least one securing means (6) comprises at least one arrangement composed of at least one permanent magnet and at least one magnetizable material and also at least one electromagnet, wherein preferably a relative movement of the permanent magnet can be performed by the electromagnet.

2. Item of furniture (24) according to Claim 1,
**characterized**
**in that** the securing means (6) is arranged in the structure (29) and preferably can be connected to a bottom element (28).

3. Item of furniture (24) according to Claim 1 or 2,
**characterized**
**in that** the securing means (6) can be switched on and off by means of a power source (8) and at least one actuating means (9) and is arranged in the structure and preferably can be connected to a bottom element.

4. Item of furniture (24) according to one of the preceding claims,
**characterized**
**in that** a relative movement between the permanent magnet and the magnetizable material can be performed.

5. Item of furniture (24) according to one of the preceding claims,
**characterized**
**in that** the item of furniture (24) is in the form of a table (1), comprising at least one supporting means (2), in particular a table leg or the like, and at least one tabletop (3), wherein the at least one supporting means (2) has an upper end (4) and a lower end (5) and wherein the supporting means (2) is connected at the upper end (4) to the tabletop (3), wherein the supporting means (2) comprises the securing means (6), which is arranged on a lower end (5) of the supporting means (2) and has magnetic properties.

6. Table according to Claim 5,
**characterized**
**in that** the at least one supporting means (2) has a cavity (7) at least in certain portions and the at least one securing means (6) is arranged in the cavity (7) .

7. Table according to either of Claims 5 and 6,
**characterized**
**in that** the actuating means (9) is arranged on the tabletop (3) and in particular is connected to the tabletop (3).

8. Table according to one of the preceding Claims 5 to 7,
**characterized**
**in that** the lower end (5) of the supporting means (2) comprises a contact surface (10), wherein the contact surface (10) is formed by a magnet (11), in particular an electromagnet, or can be magnetized by the magnet (11), in particular the electromagnet.

9. Table according to one of the preceding Claims 5 to 8,
**characterized**
**in that** the supporting means comprises portions (21, 21', 21'') which can be moved in such a way that the table (1) is height-adjustable.

10. Table according to one of the preceding Claims 5 to 9,
**characterized**
**in that** the tabletop (3) comprises at least one current-carrying connecting means (22).

11. Motor home, mobile home or similar travel or recreational vehicle (13) comprising a living area (14) and/or a sanitary area (23) with a floor (15) and also at least one item of furniture (24) arranged in the living area (14) and/or in the sanitary area (23) ,
**characterized**
**in that** the item of furniture (24) is designed according to at least one of Claims 1 to 10 and the floor (15) comprises at least one metallic surface at least in a partial region, wherein the item of furniture (24) can be magnetically secured to the floor (15) in a releasable manner.

12. Motor home, mobile home or similar travel or recreational vehicle according to Claim 11,
**characterized**
**in that** the metallic surface is designed as a magnetically active rail (33, 33') or a plate element which is set in the floor (15), preferably is integrated inconspicuously or is covered by a floor covering.

## Revendications

1. Meuble (24), comprenant des éléments latéraux (27, 27') formant un corps (29), un élément de recouvrement (32) et/ou élément de plancher (28) et/ou une assise, le meuble (24) comprenant au moins un moyen de fixation (6) pour fixer le meuble (24) à un élément de plancher (28) ou à un élément de paroi, et le moyen de fixation (6) présentant des propriétés magnétiques,
**caractérisé en ce que** ledit au moins un moyen de fixation (6) comprend au moins un agencement composé d'au moins un aimant permanent et d'au moins un matériau magnétisable, ainsi qu'au moins un électroaimant, un mouvement relatif de l'aimant permanent pouvant de préférence être effectué par l'électroaimant.

2. Meuble (24) selon la revendication 1, **caractérisé en ce que** le moyen de fixation (6) est disposé dans le corps (29) et peut de préférence être relié à un élément de plancher (28).

3. Meuble (24) selon la revendication 1 ou 2, **caractérisé en ce que** le moyen de fixation (6) peut être mis sous ou hors tension à l'aide d'une source de courant (8) et d'au moins un moyen d'actionnement (9) et est disposé dans le corps et peut de préférence être relié à un élément de plancher.

4. Meuble (24) selon l'une quelconque des revendications précédentes, **caractérisé en ce qu'**un mouvement relatif peut être effectué entre l'aimant permanent et le matériau magnétisable.

5. Meuble (24) selon l'une quelconque des revendications précédentes, **caractérisé en ce que** le meuble (24) est réalisé sous forme de table (1), comprenant au moins un moyen de support (2), en particulier un pied de table ou similaires, et au moins un plateau de table (3), ledit au moins un moyen de support (2) présentant une extrémité supérieure (4) et une extrémité inférieure (5), et le moyen de support (2) étant relié à l'extrémité supérieure (4) au plateau de table (3), le moyen de support (2) comprenant le moyen de fixation (6) qui est disposé à une extrémité inférieure (5) du moyen de support (2) et présentant des propriétés magnétiques.

6. Table selon la revendication 5, **caractérisée en ce que** ledit au moins un moyen de support (2) présente au moins par endroits une cavité (7) et ledit au moins un moyen de fixation (6) est disposé dans la cavité (7).

7. Table selon l'une quelconque des revendications 5 et 6, **caractérisée en ce que** le moyen d'actionnement (9) est disposé sur le plateau de table (3) et est en particulier relié au plateau de table (3).

8. Table selon l'une quelconque des revendications précédentes 5 à 7, **caractérisée en ce que** l'extrémité inférieure (5) du moyen de support (2) comprend une surface de contact (10), la surface de contact (10) étant réalisée par un aimant (11), en particulier un électroaimant, ou pouvant être magnétisée par l'aimant (11), en particulier l'électroaimant.

9. Table selon l'une quelconque des revendications précédentes 5 à 8, **caractérisée en ce que** le moyen de support comprend des parties (21, 21', 21") qui sont mobiles de telle sorte que la table (1) est réglable en hauteur.

10. Table selon l'une quelconque des revendications précédentes 5 à 9, **caractérisée en ce que** le plateau de table (3) comprend au moins un moyen de connexion (22) conducteur.

11. Camping-car, caravane ou véhicule de voyage ou de loisir similaire (13), comprenant une zone de séjour (14) et/ou une zone sanitaire (23) équipée d'un plancher (15) ainsi qu'au moins un meuble (24) disposé dans la zone de séjour (14) et/ou dans la zone sanitaire (23),
**caractérisé en ce que** le meuble (24) est réalisé selon au moins l'une des revendications 1 à 10 et le plancher (15) comprend au moins dans une zone partielle au moins une surface métallique, le meuble (24) pouvant être fixé magnétiquement au plancher (15) de manière amovible.

12. Camping-car, caravane ou véhicule de voyage ou de loisir similaire selon la revendication 11, **caractérisé en ce que** la surface métallique est réalisée sous la forme d'un rail (33, 33') à effet magnétique ou d'un élément de plaque qui est incorporé dans le plancher (15), de préférence intégré de manière invisible ou recouvert d'un revêtement de sol.
